**Europäisches Patentamt**

(19) **European Patent Office**

**Office européen des brevets**

(11) Numéro de publication : **0 311 508 B1**

(12) ## FASCICULE DE BREVET EUROPEEN

(45) Date de publication du fascicule du brevet :
**19.06.91 Bulletin 91/25**

(51) Int. Cl.⁵ : **B01J 33/00**

(21) Numéro de dépôt : **88402508.1**

(22) Date de dépôt : **04.10.88**

(54) **Perfectionnements apportés aux catalyseurs solides en grains, procédé de préparation de ces catalyseurs et applications de ceux-ci.**

Le dossier contient des informations techniques présentées postérieurement au dépôt de la demande et ne figurant pas dans le présent fascicule.

(30) Priorité : **07.10.87 FR 8713846**

(43) Date de publication de la demande :
**12.04.89 Bulletin 89/15**

(45) Mention de la délivrance du brevet :
**19.06.91 Bulletin 91/25**

(84) Etats contractants désignés :
**BE DE ES FR GB IT LU NL SE**

(56) Documents cités :
**DE-C- 937 047**
**FR-A- 802 536**

(56) Documents cités :
**FR-A- 2 163 584**
**LU-A- 61 371**
**US-A- 3 453 217**
**US-A- 3 563 912**
**US-A- 3 720 627**

(73) Titulaire : **COMPAGNIE DE RAFFINAGE ET DE DISTRIBUTION TOTAL FRANCE**
**84, rue de Villiers**
**F-92300 Levallois Perret (FR)**

(72) Inventeur : **Gouzard, Jean-Paul**
**31, rue du Docteur Guionis**
**F-92500 Rueil-Malmaison (FR)**
Inventeur : **Szabo, Georges**
**38, rue de Normandie**
**F-76290 Montivilliers (FR)**

(74) Mandataire : **Jolly, Jean-Pierre et al**
**Cabinet Jolly 54, rue de Clichy**
**F-75009 Paris (FR)**

## Description

L'invention concerne des perfectionnements apportés à des catalyseurs solides en grains, notamment à des catalyseurs sensibles aux atmosphères humides et/ou oxygénées. L'invention concerne également la préparation de ces catalyseurs perfectionnés et leurs applications à des réactions chimiques se développant en atmosphère contrôlée, telles que des réactions d'isomérisation et d'alkylation.

De très nombreux catalyseurs sont susceptibles d'être transformés et donc altérés au contact de l'air et, plus particulièrement, de l'air humide. Ce sont généralement des catalyseur comprenant un support composé de substances réfractaires de surface spécifique et de volume poreux suffisant, comprenant des sites acides de Lewis ou des métaux ou des sulfures très actifs. Les supports de ces catalyseurs sont généralement composés de substances réfractaires choisies dans le groupe constitué par l'alumine, la silice, les alumino-silicates, les zéolites, la magnésie, la zircone, les oxydes de gallium, de titane, de thorium et de bore, ou un mélange de ces oxydes, présentant une surface spécifique comprise entre 15 et 1000 m² par gramme et, de préférence, entre 100 et 350 m² par gramme, et un volume poreux spécifique supérieur à 0,02 cm³ par gramme.

Parmi les catalyseurs à sites acides de Lewis, on trouve les catalyseurs de type Friedel-Craft à base d'AlCl₃, d'AlBr₃ et autres, extrêmement sensibles à l'humidité et à l'oxygène de l'air, comme d'autres catalyseurs halogénés du marché, mais aussi les catalyseurs à base de BF₃, comme le catalyseur mis en oeuvre dans le procédé d"alkylation du benzène". D'autres catalyseurs au nickel-Raney ou à base de sulfures pyrophoriques sont également sensibles aux atmosphères humides et oxygénées.

La fabrication, la manipulation et le stockage de ces catalyseurs, ainsi que les opérations de chargement et de déchargement des unités industrielles qui en utilisent une grande quantité sont très difficiles, car il faut toujours travailler en atmosphère contrôlée, inerte vis-à-vis du catalyseur. Les frais de ces opérations en atmosphère contrôlée augmentent d'autant le coût du catalyseur chez l'utilisateur.

La présente invention vise a remédier à ces inconvénients en proposant des perfectionnements apportés à de tels catalyseurs en grains, en vue de permettre leur manipulation, leur stockage et leur chargement dans des réacteurs à l'air libre, même en présence d'humidité. On entend par catalyseur en grains tout catalyseur, extrudé ou non, sous forme cylindrique, sphérique ou multilobée, ou sous toute autre forme visible microscopiquement.

L'invention vise également à proposer un tel catalyseur amélioré, qui puisse être préparé d'une façon simple et dont le prix de revient soit largement abaissé par rapport au catalyseur ne présentant pas ce perfectionnement.

A cet effet, l'invention a pour objet un catalyseur solide en grains, chaque grain comprenant un support choisi dans le groupe constitué par l'alumine, la silice, les aluminosilicates, les zéolites, la magnésie, la zircone, les oxydes de gallium, de titane, de thorium et de bore ou un mélange de ces oxydes, et au moins un composé actif choisi dans le groupe constitué par les acides de Lewis, notamment AlCl₃ et BF₃, chacun desdits grains étant enrobé d'un film protecteur, continu et amovible, en une matière imperméable aux gaz, caractérisé en ce que la matière constituant le film protecteur des grains est anhydre et est constituée :
– d'environ 95% à 90% en poids, d'au moins un hydrocarbure choisi dans le groupe constitué par les paraffines et les cires présentant un point de fusion, déterminé selon la norme AFNOR NFT 60114, compris entre 40°C et 120°C et, de préférence, entre 50°C et 80°C,
– et d'environ 5 à 10% en poids, d'au moins un additif choisi dans le groupe constitué par les cires de polymère alkyléniques, notamment les cires de polyéthylène de masse moléculaire comprise'entre 500 et 10 000 et, de préférence, comprise entre 1500 et 6000.

Conformément à l'invention, chaque grain de catalyseur est donc isolé de l'atmosphère ambiante par un film interdisant le passage des agents agressifs vis-à-vis du catalyseur, ce film étant réalisé en une matière elle-même inerte vis-à-vis des constituants du catalyseur.

Afin de supporter les opérations de manutention, le matériau constitutif de ce film est résistant aux chocs, et n'est pas collant, en vue d'éviter toute porosité au cassure du film favorisant le passage d'agents agressifs pour le catalyseur, lorsque des grains collés se séparent. A cette fin, la température du collage du film, notamment des grains enrobés entre eux sera choisie de préférence supérieure à 40°C. Ce matériau peut en outre être éliminé facilement après chargement dans une unité industrielle, au cours de la phase initiale de fonctionnement de l'unité, sans perturber ni l'activité dudit catalyseur, ni la réaction chimique prévue dans le catalyseur.

La matière constitutive du film enrobant les grains de catalyseur peut, par exemple, être déposée sur ceux-ci à l'état fondu, pour y être ensuite solidifiée par refroidissement.

Pour procéder à l'enrobage des grains de catalyseur, on peut utiliser tout système permettant, en atmosphère contrôlée inerte pour le catalyseur, de projeter la matière d'enrobage liquide chaude sur des grains froids immobiles ou en mouvement, ou d'immerger les grains dans un bain de cette matière à l'état liquide. On peut ensuite refroidir ces grains en les déplaçant d'une zone chaude à une zone froide ou en procédant à un refroidissement rapide de l'enceinte les contenant.

Il est possible, également, d'effectuer l'enrobage des grains de catalyseur, en préchauffant ces grains et en les amenant à l'état chaud et en mouvement au contact de particules solides de la matière d'enrobage, dispersée par tout moyen connu en soi, par exemple par fluidisation.

Pour procéder à la fusion et/ou à la solidification rapide de la matière constituant le film d'enrobage des grains de catalyseur, l'écart de température nécessaire entre lesdits grains et ladite matière ou entre les zones chaudes et froides de l'enceinte de traitement pourra être compris entre 1 et 100°C et, de préférence, entre 20 et 80°C.

Le film enrobant les grains de catalyseur pourra être éliminé, avant ou pendant la mise en oeuvre du processus chimique dans lequel ce catalyseur intervient, par fusion et/ou par dissolution dans un fluide solvant.

Selon l'invention, la matière constituant le film d'enrobage peut avantageusement présenter une température de fusion, déterminée par la méthode AFNOR NFT 60114, inférieure ou égale à 120°C.

Pour rendre ces paraffines et ces cires microcristallines, lorsqu'elles ne le sont pas d'origine, et ainsi augmenter leurs propriétés filmantes et plastifiantes, c'est-à-dire leur homogénéité et leur résistance aux chocs lors des opérations de manutention des grains de catalyseur (stockage et chargement des réacteurs), la matière constituant ledit film comprend, d'environ 5 à 10% en poids d'au moins un additif choisi dans le groupe constitué par les cires de polymères alkyléniques, notamment les cires de polyéthylène de masse moléculaire comprise entre 500 et 10.000 et, de préférence, comprise entre 1.500 et 6.000. Un film ainsi réalisé reste continu et sans fissure, donc imperméable à l'air humide.

Bien entendu, le film de protection doit non seulement isoler le catalyseur d'une atmosphère détruisant ses sites actifs, mais aussi ne pas réagir avec ceux-ci. Pour être inerte vis-à-vis du catalyseur enrobé, la matière constituant ledit film doit, par exemple, être rendue exempte de molécules réagissant avec les catalyseurs. Dans le cas des paraffines et des cires, celles-ci contiennent généralement une teneur en eau de 100 ppm à 300 ppm et une teneur en hydrocarbures aromatiques pouvant atteindre 1% en poids. Ces composés réagissent fortement avec certains sites actifs des catalyseurs à enrober, comme les acides de Lewis. Il est connu en particulier, que le chlorure d'aluminium $AlCl_3$ et le trifluorure de bore $BF_3$, qui sont des sites actifs présents dans certains catalyseurs, s'hydrolysent en présence d'humidité et forment des complexes avec les hydrocarbures aromatiques.

Pour utiliser ces paraffines et ces cires dans le cadre de la présente invention, il sera donc nécessaire de les déshydrater et de les désaromatiser. Comme il est connu dans la technique, on pourra les faire fondre en présence d'un déshydratant de type connu en soi, sous atmosphère inerte non oxydante. Un traitement comparable de ces paraffines et cires par le chlorure d'aluminium $AlCl_3$ présente le double avantage d'éliminer l'eau et les hydrocarbures aromatiques en une seule opération.

Le film enrobant les grains de catalyseur sera de préférence mince et pourra avoir avantageusement une épaisseur comprise entre 0,01 et 1 mm.

Le poids de matière constituant ledit film pourra représenter de 0,1 à 10% du poids total des grains de catalyseur enrobés par ledit film et, de préférence, de 0,5 à 5% en poids.

L'invention a également pour objet l'application des catalyseurs définis ci-dessus à des réactions chimiques se développant en atmosphère contrôlée anhydre, de préférence non oxygénée, notamment des réactions d'isomérisation de normal-paraffines de $C_4$ à $C_8$ et d'alkylation des hydrocarbures oléfiniques et aromatiques.

Dans cette application, avant utilisation, le catalyseur peut être manutentionné sous atmosphère humide et/ou oxygénée, c'est-à-dire stocké, puis chargé dans le réacteur dans lequel la réaction chimique se fera. Après avoir rendu inerte, pour le catalyseur non enrobé, l'atmosphère du réacteur, le film d'enrobage du catalyseur est alors éliminé par fusion et écoulement de la matière le constituant à une température comprise entre 40°C et 120°C.

Cette fusion dudit film peut être réalisée par passage d'un fluide chaud, liquide ou gazeux, à travers le lit constitué par les grains de catalyseur enrobés. Ce fluide chaud peut être un gaz intervenant dans la réaction catalysée, avant l'introduction de la charge et le démarrage de la réaction catalytique, ou peut être encore la charge elle-même. Une autre alternative, pour éliminer le film selon l'invention, est la dissolution de celui-ci dans un fluide solvant, liquide ou gazeux, puis son entraînement au travers de tout ou partie du lit catalytique. Le solvant peut être constitué par la charge introduite dans le réacteur.

L'exemple donné ci-après est destiné à illustrer l'invention et n'implique aucune limitation de celle-ci.

## EXEMPLE

Cet exemple montre l'efficacité de la protection obtenue par enrobage dans un film étanche et imperméable aux fluides gazeux de grains de catalyseur sensibles aux atmosphères oxygénées et humides et l'absence d'incidence de ce film sur la réactivité du catalyseur.

Le catalyseur A utilisé est un catalyseur adapté à l'isomérisation des n-paraffines de $C_4$ à $C_7$. Les caractéristiques de ce catalyseur sont données dans le Tableau I ci-après :

TABLEAU I

| Support | Alumine KETJEN, référence CK 300. Surface spécifique : 189 $m^2/g$ |
|---|---|
| Eléments présents sur le support (% en poids) | Pt = 0,33% Zr = 0,16 % Cl = 3,5 % (soit 5 % de AlCl$_3$ sur le support) |

Ce catalyseur A est destiné à être enrobé dans un film constitué par une paraffine déshydratée dopée par 7% d'une cire de polyéthylène, de masse moléculaire comprise entre 1.500 et 6.000, le point de fusion de ladite matière étant de 65°C.

1.- Préparation de la paraffine

Pour déshydrater la paraffine, la Demanderesse a fait fondre cette dernière en présence de plusieurs déshydratants. L'efficacité de ces traitements est donnée dans le Tableau II ci-après, qui présente les teneurs en eau de ladite paraffine après traitement ; les mesures de teneurs en eau ont été faites par Karl Fisher (norme AFNOR NFT 60-154).

TABLEAU II

| Agent déshydratant | Teneur en $H_2O$, p.p.m |
|---|---|
| – sans déshydratant | 200 |
| – tamis $3.15^{-8}$ cm (3 Å) | < 1 |
| – AlCl$_3$ | 3 |
| – N2 sec, strippage | < 1 |

On a finalement utilisé comme matière d'enrobage du catalyseur A une paraffine traitée par AlCl$_3$, car ce traitement déshydratant permet en outre d'éliminer par complexation les molécules d'hydrocarbures aromatiques présentes sous forme d'impuretés dans cette paraffine, qui pourraient réagir avec l'AlCl$_3$ présent dans le catalyseur A.

4

## 2.- Enrobage du catalyseur A

On utilise un tube en verre susceptible d'être obturé tout en étant balayé par un gaz inerte, qui, dans le cas présent, est de l'azote sec. On introduit dans l'éprouvette la matière prétraitée par AlCl₃ destinée à constituer le film d'enrobage, puis un panier en toile d'acier inoxydable contenant les grains du catalyseur A sous atmosphère d'azote sec. On fait fondre la matière constituant le film en chauffant le tube au moyen d'un cordon chauffant enroulé autour de celui-ci, puis on plonge le panier contenant les grains de catalyseur dans la matière fondue et on relève lentement le panier. L'opération répétée plusieurs fois conduit à un enrobage d'aspect uniforme. La masse de catalyseur enrobé est exposée à l'air, puis introduite dans le réacteur d'isomérisation.

## 3.- Elimination du film d'enrobage et démarrage de la réaction d'isomérisation

Le réacteur contenant les grains de catalyseur est balayé par un courant d'hydrogène, puis chauffé jusqu'à 150°C. Lorsque la température atteint 65°C, le film d'enrobage commence à fondre et à s'écouler au travers du lit du catalyseur ; lorsque le film fondu est éliminé, le n-pentane constituant la charge est introduit dans le réacteur.

## 4.- Performances catalytiques

Les performances du catalyseur, enrobé ou non, sont déterminées dans la réaction d'isomérisation du n-pentane dans les conditions suivantes :
- Quantité de catalyseur : 13 cm³(8,6 g)
- Composition de la charge :
n-pentane : 96,01% en poids
isopentane 2,90% en poids
2-méthylpentane 1,09% en poids
- Débit de la charge : 61,8 cm³/h, soit une vitesse spatiale horaire exprimée en pph (point de charge passée par unité de poids de catalyseur et par heure) de
- Débit de H₂ : 38,7 1/h, soit H₂/Hydrocarbures = 3,0
- Pression totale : 30. 10⁵ Pascals (30 bars)
- Température : 150°C.

La charge est dopée par 300 ppm de dichloropropane. Les résultats des tests sont rassemblés dans le tableau III.

## TABLEAU III

| Catalyseur | % Conversion $nC_5$ | % Isomérisation |
|---|---|---|
| Sans enrobage : | | |
| * non exposé à l'air | 70,21 | 100 |
| * exposé à l'air | 1 | 100 |
| Enrobé exposé à l'air | 63,0 | 100 |

Ces résultats montrent que le catalyseur enrobé exposé à l'air garde son activité catalytique, alors que, sans enrobage, après exposition à l'air, il devient inactif.

**Revendications**

1. Catalyseur solide en grains, chaque grain comprenant un support choisi dans le groupe constitué par

5

l'alumine, la silice, les aluminosilicates, les zéolites, la magnésie, la zircone, les oxydes de gallium, de titane, de thorium et de bore ou un mélange de ces oxydes, et au moins un composé actif choisi dans le groupe constitué par les acides de Lewis, notamment AlCl$_3$ et BF$_3$, chacun desdits grains étant enrobé d'un film protecteur, continu et amovible, en une matière imperméable aux gaz, caractérisé en ce que la matière constituant le film protecteur des grains est anhydre et est constituée :

– d'environ 95% à 90% en poids, d'au moins un hydrocarbure choisi dans le groupe constitué par les paraffines et les cires présentant un point de fusion, déterminé selon la norme AFNOR NFT 60114, compris entre 40°C et 120°C et, de préférence, entre 50°C et 80°C,

– et d'environ 5 à 10% en poids, d'au moins un additif choisi dans le groupe constitué par les cires de polymère alkyléniques, notamment les cires de polyéthylène de masse moléculaire comprise entre 500 et 10.000 et, de préférence, comprise entre 1.500 et 6000.

2. Catalyseur selon la revendication 1, caractérisé en ce que ladite matière a une température de fusion déterminée par la norme AFNOR NFT 60114 inférieure ou égale à 120°C.

3. Catalyseur selon l'une des revendication 1 et 2, caractérisé en ce que le film protecteur a un épaisseur comprise entre 0,01 et 1 mm.

4. Catalyseur selon l'une des revendications 1 à 3, caractérisé en ce que la matière constituant le film protecteur représente entre 0,1 et 10% du poids total des grains de catalyseur enrobés et, de préférence, entre 0,5 et 5% en poids.

5. Application d'un catalyseur selon l'une des revendications 1 à 4, à des réactions chimiques se développant en atmosphère contrôlée anhydre, notamment à l'isomérisation des normal-paraffines de C4 à C8, et à l'alkylation des hydrocarbures oléfiniques et aromatiques.


## Ansprüche

1. Fester körniger Katalysator, wobei jedes Korn einen Träger aus der Gruppe bestehend aus Tonerde, Kieselerde, den Aluminosilicaten, den Zeolithen, Magnesia, Zirkonerde, den Gallium-, Titan-, Thorium- und Boroxiden oder einem Gemisch dieser Oxide und mindestens eine aktive Verbindung aus der Gruppe bestehend aus den Lewis-Säuren, insbesondere AlCl$_3$ und BF$_3$, aufweist und von einem ununterbrochenen sowie entfernbaren Schutzfilm aus einem gasundurchlässigen Material umhüllt ist, dadurch **gekennzeichnet**, daß das den Schutzfilm der Körner bildende Material wasserfrei ist und besteht aus

– etwa 95 bis 90 Gewichtsprozent mindestens eines Kohlenwasserstoffs aus der Gruppe bestehend aus den Paraffinen und den Wachsen mit einem nach der Norm AFNOR NFT 60 114 bestimmten Schmelzpunkt zwischen 40°C und 120°C, vorzugsweise zwischen 50°C und 80°C, und

– etwa 5 bis 10 Gewichtsprozent mindestens eines Zusatzes aus der Gruppe bestehend aus den alkylenischen Polymerisatwachsen, insbesondere den Polyäthylenwachsen mit einem Molekulargewicht zwischen 500 und 10 000, vorzugsweise zwischen 1 500 und 6 000.

2. Katalysator nach Anspruch 1, dadurch **gekennzeichnet**, daß das Material eine nach der Norm AFNOR NFT 60 114 bestimmte Schmelztemperatur geringer als oder gleich 120°C aufweist.

3. Katalysator nach Anspruch 1 oder 2, dadurch **gekennzeichnet**, daß der Schutzfilm eine Dicke zwischen 0,01 und 1 mm aufweist.

4. Katalysator nach Anspruch 1, 2 oder 3, dadurch **gekennzeichnet**, daß das den Schutzfilm bildende Material zwischen 0,1 und 10 Gewichtsprozent, vorzugsweise zwischen 0,5 und 5 Gewichtsprozent, bezogen auf das Gesamtgewicht der umhüllten Katalysatorkörner, ausmacht.

5. Verwendung eines Katalysators nach einem der Ansprüche 1 bis 4 bei chemischen Reaktionen, welche sich in wasserfreier kontrollierter Atmosphäre entwickeln, insbesondere bei der Isomerisation der Normalparaffine von C4 bis C8 und bei der Alkylierung von olefinischen und aromatischen Kohlenwasserstoffen.


## Claims

1. A solid granular catalyst, each granule comprising a carrier selected from the group comprising alumina, silica, the aluminosilicates, the zeolites, magnesia, zirconia, the oxides of gallium, titanium, thorium and boron, or a mixture of these oxides, and at least one active compound selected from the group comprising the Lewis acids, in particular AlCl$_3$ and BF$_3$, each of said granules being coated with continuous and removable protective film of a gas-impermeable material, characterised in that the material forming the protective film for the granules is anhydrous and is composed of :

– approximately 95% to 90% by weight of at least one hydrocarbon selected from the group comprising the paraffins and waxes having a melting point, determined in accordance with the standard AFNOR NFT 60114, of between 40°C and 120°C and, preferably, between 50°C and 80°C,

– and approximately 5 to 10% by weight of at least one additive selected from the group comprising alkylene polymer waxes, in particular polyethylene waxes having a molecular weight of between 500 and 10,000 and, preferably, between 1,500 and 6,000.

2. A catalyst according to claim 1, characterised in that said material has a melting point, determined by the standard AFNOR NFT 60114, lower than or equal to 120°C.

3. A catalyst according to either claim 1 or 2, characterised in that the protective film is of a thickness of between 0.01 and 1 mm.

4. A catalyst according to any one of claims 1 to 3, characterised in that the material forming the protective film represents between 0.1 and 10% of the total weight of the coated catalyst granules and, preferably, between 0.5 and 5% by weight.

5. Application of a catalyst according to any one of claims 1 to 4 to chemical reactions carried out in a controlled anyhydrous atmosphere, in particular to the isomerisation of n-paraffins having C4 to C8, and to the alkylation of olefinic and aromatic hydrocarbons.